# EUROPÄISCHE PATENTSCHRIFT

(11) **EP 2 787 920 B1**
(45) Veröffentlichungstag und Bekanntmachung des Hinweises auf die Patenterteilung: **09.03.2016**
(21) Anmeldenummer: 12816234.4
(22) Anmeldetag: 09.12.2012
(51) Int. Cl.: A61C 8/00

(54) **ENOSSALES EINZELZAHNIMPLANTAT**
ENDOSSEOUS SINGLE TOOTH IMPLANT
IMPLANT DENTAIRE INDIVIDUEL INTRA-OSSEUX

(30) Priorität: 09.12.2011 DE 102011056253; 07.09.2012 DE 202012103424 U
(43) Veröffentlichungstag der Anmeldung: 15.10.2014
(73) Patentinhaber: Epiphanostics GmbH, 83607 Holzkirchen (DE)
(72) Erfinder: DÜRR, Walter, 75196 Remchingen (DE)
(74) Vertreter: Nobbe, Matthias
(86) Internationale Anmeldenummer: PCT/DE2012/100375
(87) Internationale Veröffentlichungsnummer: WO 2013/083125

(56) Entgegenhaltungen:
- US-A- 5 015 186
- US-A- 5 302 126
- US-A1- 2003 113 690
- US-A1- 2007 059 666

## Beschreibung

Die Erfindung betrifft ein Einzelzahnimplantat für einen festsitzenden Zahnersatz mit den Merkmalen des Patentanspruches 1.

Bei einem Einzelzahnimplantat, wie es aus der DE 40 28 855 C2 bekannt und auch Gegenstand der DE 195 09 762.9-32 ist, erfolgt die Verdrehsicherung in der Weise, dass die Grundkörper-Formschlusselemente am Boden der Ringausnehmung des Grundkörpers und die Distanzhülsen-Formschlusselemente, die hierzu komplementär sind, am zervikalen Stirnrand des Zentrierbundes der Distanzhülse vorgesehen sind. Fertigungstechnisch sind derartige Formschlusselemente nur verhältnismäßig schwierig herzustellen, wobei es ferner in manchen Anwendungsfällen nicht sonderlich günstig ist, dass nicht die volle Tiefe der Ringausnehmung bzw. des Zentrierbundes zum Zentrieren, Fixieren und Sichern der Distanzhülse relativ zum Grundkörper zur Verfügung steht.

Auch bei einem anderen Dentalimplantat, wie es aus der DE 37 35 378 vorgesehen ist, treten Schwierigkeiten ähnlicher Art auf, die darauf beruhen, dass auch dort die Formschlusselemente des Grundkörpers mit Abstand von dessen koronalen Stirnrand innerhalb einer Blindbohrung des Grundkörpers liegen.

Aus der DE 41 27 839 A1 ist ein Implantat-Grundkörper bekannt, dessen zentrale Ringausnehmung ein Formschlusselement aufweist, welches sich unmittelbar an den koronalen Stirnrand des Grundkörpers anschließt, wobei das Formschlusselement nutenförmig gestaltet ist und das in dem Grundkörper einzusetzende Halteteil eine dazu komplementäre Gestaltung aufweist. Ein gesonderter Implantatpfosten ist dabei nicht vorgesehen.

Aus der DE 195 34 979 C1 ist ein Einzelzahnimplantat bekannt, bei dem die Formschlusselemente des Grundkörpers unmittelbar im Anschluss an dessen koronalen Stirnrand mit entsprechender Anordnung und Ausbildung der hierzu komplementären Abutment-Formschlusselemente angeordnet sind. Dadurch, dass die gesamte Tiefe der Ringausnehmung des Grundkörpers für die Zentrierung und Führung des Abutments zur Verfügung steht, soll sich eine deutlich verbesserte Stabilität der Verbindung zwischen Distanzhülse und Grundkörper bei einem größeren Gestaltungsspielraum in der Art der Teilung sowie der Formgebung der Formschlusselemente ergeben.

Die Erfindung bildet nun die im Stand der Technik bekannten Implantate wie in US 5302126 offenbart, dahingehend weiter, dass eine verbesserte Führung und Zentrierung des Abutments im Grundkörper bei gleichzeitig vereinfachter Herstellung gewährleistet ist.

Erfindungsgemäß wird diese Aufgabe in Weiterbildung des gattungsgemäßen enossalen Einzelzahnimplantates durch die Kombination der Merkmale des Patentanspruches 1 gelöst. Besondere Ausführungsformen der Erfindung sind Gegenstand der Unteransprüche.

Genauer betrifft die Erfindung ein enossales Einzelzahnimplantat für einen festsitzenden Zahnersatz, mit einem im Wesentlichen zylindrischen, in eine in einen Kieferknochen eingebrachte Bohrung einsetzbaren Grundkörper mit einer Ringausnehmung mit einem Formschlussabschnitt und mit einer zu seinem koronalen Ende hin offenen, zervikal zu der Ausnehmung angeordneten Bohrung, die einen am zervikalen Ende im Grundkörper angeordneten Gewindeabschnitt zur Festlegung einer Haltschraube aufweist, einem in die Ausnehmung des Grundkörpers einsetzbaren Abutment mit einem Formschlussabschnitt, mit einer Bohrung zur Aufnahme der Halteschraube und mit einem Befestigungskopf für den Zahnersatz, und einer in die Blindbohrung des Grundkörpers einsetzbaren und das Abutment durchsetzenden Halteschraube, wobei der Formschlussabschnitt des Grundkörpers mindestens ein in Umfangsrichtung wirkendes Grundkörper-Formschlusselement aufweist und der Formschlussabschnitt des Abutments mindestens ein zu dem Grundkörper-Formschlusselement komplementäres Abutment-Formschlusselement aufweist, wobei der Formschlussabschnitt des Grundkörpers und der Formschlussabschnitt des Abutments in der Form zueinander komplementär sind, dass das Abutment in die Ausnehmung des Grundkörpers so einsetzbar ist, dass die jeweiligen Formschlusselemente miteinander in Eingriff gebracht werden, wobei die zueinander komplementären Formschlusselemente in Form einer Vaterteil-Mutterteil-Verbindung ausgebildet sind.

Erfindungsgemäß sind der Formschlussabschnitt des Grundkörpers und der Formschlussabschnitt des Abutments in der Form so aufeinander abgestimmt, dass das Abutment in die Ausnehmung des Grundkörpers so eingesetzt werden kann, dass die jeweiligen Formschlusselemente miteinander in Eingriff gebracht werden können und so eine Bewegung in Umfangsrichtung verhindern. Die jeweiligen Formschlussabschnitte können als kegelstumpfartige oder hohlzylindrische Ringausnehmung oder Bohrung, auch mit Abschnitten mit unterschiedlichen Durchmessern, im Grundkörper, und dazu jeweils korrespondierendem außenzylindrischen Abschnitt, oder Abschnitte, des Abutments gestaltet sein. Die folgende Beschreibung der Elemente der Erfindung gilt insoweit jeweils für alle Ausführungsformen, sofern nicht Gegenteiliges festgehalten ist.

In einer erfindungsgemäßen Ausführungsform kann der Formschlussabschnitt des Grundkörpers besonders als ein Hohlkegelstumpf ausgebildet sein, beispielsweise mit einem Konuswinkel (nicht-hemmend) von 6° bis 18°, besonders 10° bis 16°, ganz besonders 12° bis 15°, insbesondere 14°, jeweils zur Längsachse des Hohlkegelstumpfes angegeben - halber Wert des Winkels der Kegelspitze -, aufweist. In diesem Fall ist der Formschlussabschnitt des Abutments als dem Hohlkegelstumpf korrespondierender Kegelstumpf ausgebildet.

In dieser Ausführungsform ist der Formschlussabschnitt des Grundkörpers als Hohlkegelstumpf mit einer Kreisfläche mit einem kleineren Durchmesser (Deckfläche) und mit einer Kreisfläche einer größeren Durchmesser (Grundfläche) ausgebildet, wobei die Längsachse des Hohlkegelstumpfes koaxial zur Längsachse des Grundkörpers angeordnet ist, die Kreisflächen den Hohlkegelstumpf begrenzen und die Kreisfläche mit dem größeren Durchmesser dem koronalen Ende des Grundkörpers zugewandt ist.

Der Formschlussabschnitt des Grundkörpers kann sich vom koronalen Ende des Grundkörpers bis zu dem Gewindeabschnitt zur Aufnahme der Halteschraube am zervikalen Ende des Grundkörpers erstrecken. Besonders weist der Formschlussabschnitt eine Länge bis zu zwei Drittel der Gesamtlänge des Hohlkegelstumpfes des Grundkörpers, beginnend am Gewindeabschnitt zur Aufnahme der Halteschraube auf. Bei dieser Ausführung weist der Grundkörper einen ringförmigen koronalen Endabschnitt auf, der um die Mittelachse des Grundkörpers angeordnet ist. Bei dieser Ausführungsform können eine besonders gute Zentrierung und Führung des kegelstumpfförmigen Formschlussabschnittes des Abutments beim Einsetzen des Abutments in den Grundkörper erzielt werden, die mit einer Verdrehsicherung des Abutments einhergehen. Somit werden bei dieser erfindungsgemäßen Ausführungsform die Funktionen einer Zentrierung, Führung und einer Rotationssicherung in einem Funktionselement vereinigt.

Der Formschlussabschnitt des Grundkörpers kann erfindungsgemäß mindestens ein, besonders mindestens zwei, ganz besonders mindestens drei in Umfangsrichtung wirkende Grundkörper-Formschlusselemente und der Formschlussabschnitt des Abutments jeweils ein zu dem/den Grundkörper-Formschlusselement(en) komplementäres Abutment-Formschlusselement aufweisen. Die Formschlusselemente sind in der Regel in ihrer axialen Länge durch die Länge des Formschlussabschnittes begrenzt und lassen, wie oben erwähnt, in der Regel einen formschlusselementfreien Dichtabschnitt am koronalen Ende des Formschlussabschnittes frei, um bei Anziehen der Halteschraube die konischen Flächen umfangsmäßig in eine dichtende Anlage zu bringen. Der kegelstumpfförmige Formschlussabschnitt des Abutments kann eine größere axiale Länge als der korrespondierende Hohlkegelabschnitt im Grundkörper haben, so dass er aus dem Grundkörper herausragt. In dem Dichtabschnitt zwischen Kegelstumpf am Abutment und dem ringförmigen koronalen Endabschnitt des Grundkörpers kann eine Dichtung vorgesehen sein, beispielsweise ein O-Ring in einer umlaufenden Nut im Kegelstumpf am Abutment, der beim Anziehen der Halteschraube die Dichtwirkung der konischen Flächen unterstützt.

Aufgrund der erfindungsgemäßen Gestaltung des Grundkörpers mit den Formschlusselementen lässt sich der Grundkörper mittels eines an den Formschlusselementen eingreifenden Werkzeuges mit gegenüber den Ausführungen aus dem Stand der Technik erhöhtem Drehmoment in den Kieferknochen einschrauben, und das Abutment ist nach dem Einsetzen in den Grundkörpers zuverlässig gegen ein Verdrehen gesichert.

Erfindungsgemäß sind die zueinander komplementären Formschlusselemente an Grundkörper und Abutment jeweils in Form einer Vaterteil-Mutterteil-Verbindung ausgebildet, wobei das/die Vaterteil(e) an dem Grundkörper angeordnet ist/sind. Aufgrund der so gewählten Anordnung ist infolge der Vermeidung einer Verringerung der Wandstärke des Grundkörpers auch bei keramischen Werkstoffen eine präzise Kraftübertragung möglich, die die Verwendung von voll- oder teilkeramischem Grundkörper und/oder Abutment, neben den bekannten Metallen und legierten Materialien, ermöglicht. Es ist aber ebenso möglich, dass das/die Vaterteil(e) an dem Formschlussabschnitt des Abutments und die korrespondierenden Mutterteile am Grundkörper angeordnet sind.

Erfindungsgemäß kann das Vaterteil-Formschlusselement jeweils die Form eines sich parallel zur Längsachse des Grundkörpers erstreckenden Federsteges haben, der in jeweils ein korrespondierendes Mutterteil am anderen Bauteil verdrehgesichert eingreift. Die Formschlusselemente können durch mechanische Bearbeitung wie Fräsen, Bohren etc. aus den Bauteilen Grundkörper und Abutment herausgearbeitet werden.

Der Formschlussabschnitt kann zylindrisch oder konisch ausgebildet sein. Bei einer zylindrischen Ausbildung ist der Formschlussabschnitt am Abutment in der Form eines zylindrischen Abschnittes ausgebildet, der mit seinem Außendurchmesser der hohlzylindrischen Bohrung am Grundkörper in der Länge und dem Durchmesser angepasst ist.

Bei der Ausführung der Formschlussabschnitte als Hohlkegelstumpf am Grundkörper und Kegelstumpf am Abutment ist der zumindest eine Federsteg so ausgeführt, so dass der Federsteg, je nach Anordnung am Grundkörper oder Abutment, um die Längsachse des Grundkörpers oder Abutments radial erhaben und dazu axial keilförmig in Richtung des größeren Durchmessers des Kegelstumpfes oder Hohlkegelstumpfes zuläuft und dabei den Durchmesser der den Kegelstumpf abschließenden größeren Kreisfläche nicht vergrößert. Die radiale Höhe des Federsteges entspricht somit maximal der Differenz der Radien der den Kegelstumpf, bzw. Hohlkegelstumpf abschließenden Kreisflächen.

Der Federsteg kann erfindungsgemäß vorteilhaft in Form eines jeweils in einer Blindbohrung (Haltebohrung) gehaltenen Stiftes ausgebildet sein, wobei die Blindbohrung koaxial zur Längsmittelachse des Grundkörpers im konischen Bereich von Hohlkegelstumpf oder Kegelstumpf, je nach relativer Lage von Vater-bzw. Mutterteil im Grundkörpers oder im Abutment, bis in den Bereich parallel zum Gewindeabschnitt vorgesehen ist. Infolge der konischen Fläche an Hohlkegel, bzw. Kegelstumpf ist jeder Stift in einer Nut mit einem zu dem der Haltebohrung gegenüberliegenden Ende hin abnehmenden Querschnitt zumindest teilweise geführt, wobei sich eine Art Keilform des Federsteges ergibt. Um die Wandstärke im Formschlussabschnitt möglichst dick auszubilden, ist, je nach relativer Lage von Vater- bzw. Mutterteil im Grundkörpers oder im Abutment, die Blindbohrung zur Aufnahme des Stiftes oder Nut so angeordnet, dass die Bohrungsumfangslinie die Umfangslinie der Kreisfläche am zervikalen Ende tangential berührt oder die Bohrung teilweise in der Kreisfläche am zervikalen Ende angeordnet ist.

Die Stifte können jeweils einen, bevorzugt kreisförmigen, oder regelmäßig- oder unregelmäßig-polygonalen Querschnitt haben, von dem ein Querschnittssegment aus der Nut in der konischen Wandung radial zur Richtung der Längsmittelachse, je nach relativer Lage von Vater- bzw. Mutterteil, des Grundkörpers oder des Abutments, hervorsteht und bis über die maximale axiale Länge des Formschlussabschnittes den Federsteg ausbilden kann. In der einfachsten Form kann ein Stift eine zylindrische Form haben und beispielsweise in einer Drahtziehmaschine hergestellt sein. So ist es möglich, den Stift aus einem Material mit größerer Zugfestigkeit als das Material für Abutment oder Grundkörper herzustellen, so dass die Kraft über die Formschlusselemente oder Einschraubwerkzeug präzise übertragen werden können.

Um den Stift axial zu sichern, kann jeder Stift in der Blindbohrung über eine Presspassung eingepasst/eingesteckt sein.

Um die Einsetzbarkeit des Abutments in umfangsmäßig verschiedenen Positionen zu ermöglichen, können die Formschlusselemente bezüglich des Umfangs von Abutment und Grundkörper eine 30, 60, 90 oder 120 DEG-Teilung aufweisen. Weiterhin kann dabei die Anzahl der Mutterteil-Formschlusselemente gleich oder größer, beispielsweise je nach Unterteilung die doppelte oder dreifache Anzahl, als diejenige der Vaterteil-Formschlusselemente sein.

Wie oben erwähnt, kann abutmentseitig ein Dichtmittel wie ein O-Ring in einer umlaufenden Nut im Dichtabschnitt oder am Übergang vom Dichtabschnitt und zum Formschlussabschnitt des Abutments vorgesehen sein, um nach dem Einsetzen des Implantates beim Patienten ein Eindringen von Fremdkörpern und Flüssigkeit in Hohlräume des Implantates zu verhindern. Wenn erforderlich, kann zusätzlich oder alternativ ein Dichtmittel wie ein O-Ring auch in einer grundkörperseitigen Nut angeordnet sein, wobei letzteres weniger bevorzugt ist.

Wenn Dichtabschnitt des Abutments und der Endabschnitt des Grundkörpers als zueinander korrespondierende Konen mit dem oben angegebenen Konuswinkel ausgebildet sind, kann ein Dichtmittel, wie beschrieben, auch in einer umlaufenden Nut in der konischen Dichtfläche angeordnet sein.

Für den/die Implantatpfosten/Halteschraube kann in der Blindbohrung zervikal von dem konischen Formschluss- und Zentrierabschnitt des Grundkörpers ein Innengewinde vorgesehen sein, wobei die Halteschraube das Abutment auch vollständig durchsetzen kann.

Weiterhin betrifft die Erfindung auch Grundkörper und Abutment als einzelne Bauteile des erfindungsgemäßen Implantates, die entsprechend den Ausführungsdetails für das Implantat insgesamt ausgebildet sind.

Es ist ein wesentlicher Aspekt der vorliegenden Erfindung, dass mittels einer vereinfachten mechanischen Bearbeitung Grundkörper und Abutment jeweils mit korrespondierenden Formschlusselementen in Form der oben beschriebenen Nut-Feder-Verbindung in einem Zentrier- und Führungsbereich gefertigt werden können. Gegenüber den im Stand der Technik bekannten Lösungen ist die Bearbeitung der Rohlinge wesentlich vereinfacht und kostengünstiger.

So ist die Erfindung auch gerichtet auf die Verwendung einer Formschlussverbindung nach Art einer Nut-Feder-Verbindung zur verdrehgesicherten Verbindung von Implantatteilen, wobei die Nut-Feder-Verbindung dadurch ausgebildet wird, dass ein in einer Bohrung an einem Implantat-Bauteil gehaltener Stift formschlüssig in eine korrespondierende Nut an einem zweiten Implantat-Bauteil eingreift, wobei die Formschlussverbindung in einem Kegelstumpf-Hohlkegelstumpf-Bauteil-Paar ausgebildet ist. Überall dort, wo mehrteilige Implantate Verwendung finden, die gegen Verdrehen gesichert werden müssen, kann die erfindungsgemäße Formschlussverbindung eingesetzt werden.

Nachstehend sind Ausführungsbeispiele des erfindungsgemäßen Einzelzahnimplantates anhand der schematischen Zeichnungen im Einzelnen erläutert. Dabei zeigen:
Fig. 1 im oberen Teil eine Draufsicht auf ein Ausführungsbeispiel des Grundkörpers des enossalen Einzelzahnimplantates nach der Erfindung im axialen Längsschnitt, und im unteren Teil die Draufsicht auf den Grundkörper von oben;
Fig. 2 eine Draufsicht auf ein Ausführungsbeispiel eines dem Grundkörper von Fig. 1 angepassten Abutments des Einzelzahnimplantates in einer Fig. 1 entsprechenden Darstellung, einen Längsschnitt in einer zur vorherigen Darstellung senkrechten Ebene sowie Draufsichten auf das Abutment koronal von oben und zervikal von unten.

Fig. 3 im oberen Teil eine Draufsicht auf ein zweites Ausführungsbeispiel des Grundkörpers eines enossalen Einzelzahnimplantates nach der Erfindung im axialen Längsschnitt, und im unteren Teil die Draufsicht auf den Grundkörper von oben;
Fig. 4 eine Draufsicht auf ein Ausführungsbeispiel eines dem Grundkörper von Fig. 3 angepassten Abutments des Einzelzahnimplantates in einer Fig. 3 entsprechenden Darstellung mit drei Federstegen im axialen Längsschnitt, einen Längsschnitt in einer zur vorherigen Darstellung senkrechten Ebene sowie Draufsichten auf das Abutment koronal von oben und zervikal von unten;
Fig. 5 eine Draufsicht auf ein zweites Ausführungsbeispiel eines dem Grundkörper von Fig. 3 angepassten Abutments des Einzelzahnimplantates in einer Fig. 3 entsprechenden Darstellung mit einem Federsteg im axialen Längsschnitt, einem Längsschnitt in einer zur vorherigen Darstellung senkrechten Ebene sowie mit Draufsichten auf das Abutment koronal von oben und zervikal von unten.
Fig. 6 im oberen Teil ein Ausführungsbeispiel des Grundkörpers des enossalen Einzelzahnimplantates nach der Erfindung im axialen Längsschnitt, und im unteren Teil die Draufsicht auf den Grundkörper von oben;
Fig. 7 ein Ausführungsbeispiel eines dem Grundkörper von Fig. 6 angepassten Abutments des Einzelzahnimplantates in einer Fig. 6 entsprechenden Darstellung, einem Längsschnitt in einer zur vorherigen Darstellung senkrechten Ebene sowie mit Draufsichten auf das Abutment koronal von oben (Draufsicht unten entsprechend DIN) und zervikal von unten (Draufsicht oben);
Fig. 8 im linken Teil ein Ausführungsbeispiel des Grundkörpers des enossalen Einzelzahnimplantates von Fig. 6 nach der Erfindung im axialen Längsschnitt entlang der mit Pfeilen im rechten Teil gekennzeichneten Ebene senkrecht zur Papierebene, und im rechten Teil eine Draufsicht auf den Grundkörper sowie darunter zwei Schnittzeichnungen radial zur Längsachse entlang der Ebenen B-B und C-C von oben;
Figuren 9 und 10 zwei Teildraufsichten des Abutments aus Fig. 7 von zwei Ausführungsformen;
Figuren 11 bis 13 Ausführungsbeispiele des Grundkörpers und des Abutments des erfindungsgemäßen Zahnimplantates mit gegenüber den in Figuren 6 bis 11 gezeigten Ausführungsformen bauteilseitig vertauschten Formschlusselementen.

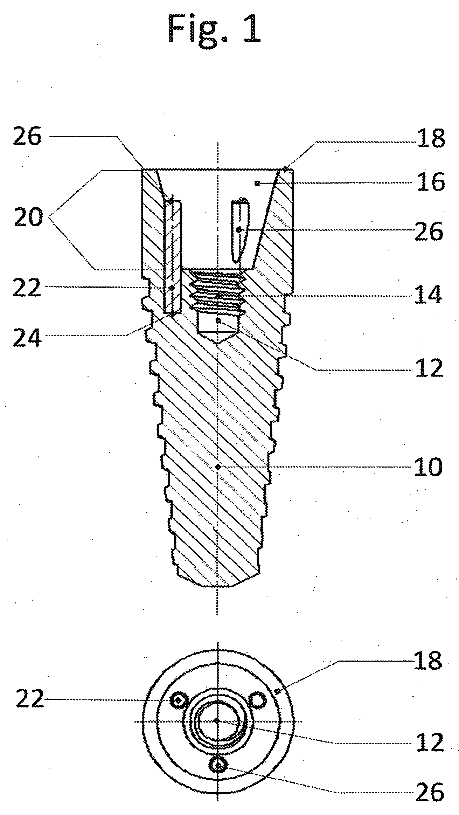

Wie Fig. 1 zeigt, weist das Einzelzahnimplantat bei dem dort dargestellten Ausführungsbeispiel einen Grundkörper 10 auf.

Der Grundkörper 10, der an seinem in Fig. 1 unten gezeigten zervikalen Ende geschlossen ausgebildet ist, weist eine zu seinem in Fig. 1 oben liegenden koronalen Ende hin offene Bohrung 12 auf. Am zervikalen Ende der Bohrung 12 ist ein Innengewinde 14 mit kleinem Durchmesser, in das eine in Fig. 1 nicht zeichnerisch dargestellte Halteschraube einschraubbar ist, vorgesehen. An das Innengewinde 14 des Grundkörpers 10 schließt in koronaler Richtung eine kegelstumpfförmige Ausnehmung 16 mit gegenüber dem Innengewinde 14 ansteigendem Innendurchmesser an.

Dabei ist die kegelstumpfförmige Ausnehmung 16 als ein an das Innengewinde 14 koronal anschließender Formschlussabschnitt 20, der gleichzeitig als Zentrier- und Führungsabschnitt wirkt, der in der Ausführungsform gemäß Figur 1 drei radial nach innen gerichteten Federstege 26 aufweist und somit einen Formschlussabschnitt ausbildet. Die Federstege 26 sind zu den Formschlussnuten 54 an dem Abutment 50 nach Art einer Nut-Feder-Verbindung korrespondierend ausgebildet und können derart bemessen sein, dass sie sich über die gesamte axiale Länge des Zentrier- und Führungsabschnittes 20 erstrecken. Die Federstege 26 können durch maschinelle Bearbeitung aus dem Grundkörper ausgebildet sein. Es ist jedoch vorteilhaft auch möglich, die Federstege 26 dadurch auszubilden, dass Stifte 22 in gleichmäßig über den Umfang verteilten axialen Blindbohrungen 24 im Abschnitt 20 gehalten werden. Dabei kann jeder der Stifte 22 mit an Blindbohrung 24 angepasstem Querschnitt, beispielsweise als Zylinderstift, so in die Bohrung 24, eingesteckt und von dieser in seinem Endabschnitt umfasst und koaxial zur Längsachse des Grundkörpers 10 gehalten sein, dass ein radial nach innen gerichteter Federsteg 26, der mit einer Formschlussnut 54 des Abutments 50 korrespondiert, ausgebildet ist. Bevorzugt sind die Blindbohrungen 24 nahe dem Gewindeabschnitt angeordnet, und die Dicke eines in der Blindbohrung gehaltenen Zylinderstiftes ist so gewählt, dass der Zylinderstift 24 über seine Länge an dem Abschnitt 20 anliegt und zumindest in einem Längenteilabschnitt in einer Nut im Zentrier- und Führungsabschnitt / Formschlussabschnitt 20 geführt ist.

An den Zentrier- und Führungsabschnitt/Formschlussabschnitt 20 schließt in koronaler Richtung ein Endabschnitt mit einem koronalen Stirnring 18 an. Bevorzugt ist der Endabschnitt lediglich in Form des koronaren Stirnringes 18 ausgebildet, so dass der Formschlussabschnitt 20 an den koronalen Stirnring 18 grenzt. Der Endabschnit kann jedoch auch als zylindrischer Endabschnitt ausgebildet sein.

Der Grundkörper 10 kann auf einfache Weise durch maschinelle Bearbeitung eines Rohlings hergestellt werden. Vorteilhaft dafür ist insbesondere die Ausgestaltung jedes Federsteges 26 als jeweils in Blindbohrung 24 im Zentrier- und Führungsabschnitt / Formschlussabschnitt 20 des Grundkörpers 10 angeordneter Stift 22. So kann vor Ausbildung des Zentrier- und Führungsabschnittes 20 jeweils eine Bohrung koaxial zur Blindbohrung 12 bis in die Wandung des Abschnittes des Innengewindes gebohrt werden, die beim Aufbohren des Bereiches 20 mit einem Kegelfräser als rinnenförmige Nut im Formschlussabschnitt 20 und in der Wandung des Innengewindes als Blindbohrungen 24 verbleibt. In diese Blindbohrung kann jeweils ein Stift 22 axial eingepasst werden, der den Federsteg 26 ausbildet. Es ist aber ebenso möglich, die Bohrungen 24 mittels eines Fräswerkzeuges im Hohlkegelstumpf auszubilden. Obgleich die Verwendung von Zylinderstiften fertigungstechnisch vorteilhaft ist, ist es ebenso möglich, Stifte mit einem regelmäßigen oder unregelmäßigen polygonalen Querschnitt und entsprechend im Querschnitt angepasster Blindbohrung 24 zu verwenden.

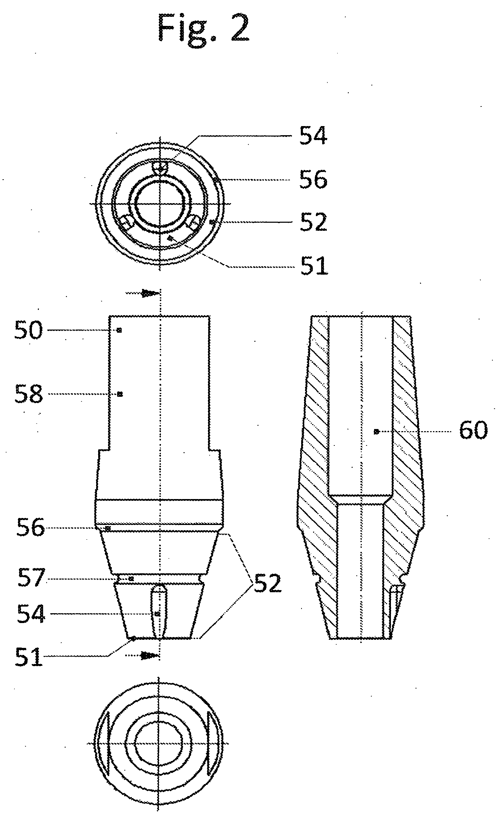

Ein in Fig. 2 gezeigtes Abutment 50 dient als Befestigungskopf für einen nicht gezeigten festsitzenden Zahnersatz und ist mit einem Befestigungskopf 58 für den Zahnersatz versehen. Im Anschluss an eine auf den Grundkörper 10 aufsetzbare Schulter 56, die als umlaufende Ringschulter ausgebildet ist, weist das Abutment 50 in zervikaler Richtung einen Zentrier- und Führungsabschnitt in Form eines Kegelstumpfes 52 auf, in dem eine Anzahl von axial verlaufenden Formschlussnuten 54 vorgesehen sind, die in ihrer Form und Anordnung, aber nicht notwendigerweise in ihrer Anzahl, den Federstegen 26 des Grundkörpers 10 entsprechen.

Beim Einsetzen des Abutments 50, das mit einer axialen Längsbohrung 60 versehen ist, deren Innendurchmesser mindestens dem Außendurchmesser der nicht gezeigten Halteschraube entspricht, in den Grundkörper 10 kommt der Kegelstumpf 52 alls Zentrier- und Führungsabschnitt des Abutments an dem Hohlkegelstumpf 16 des Grundkörpers 10 zur Anlage, und das Abutment 50 wird bei weiterem Einführen zentriert. Dabei werden die Federstege 26 und Nuten 54 gegebenenfalls unter Drehen des Abutments 50 miteinander in Eingriff gebracht, und das Abutment 50 ist so gegen ein Verdrehen gesichert. Von Vorteil ist, wenn Federstege und Nuten soweit zueinander Spiel haben, dass koronal zu den Formschlusselementen am Grundkörper und Abutment bevorzugt angeordnete Dichtabschnitte an Kegelstumpf 52 und an der als Hohlkegelstumpf ausgebildeten Ringausnehmung 16 in dichtende Wechselwirkung gebracht werden können. Dabei sitzt der an die Schulter 56 angrenzende Dichtabschnitt des Abutments 50 vorzugsweise mit Passsitz in dem Endabschnitt des Grundkörpers 10 nahe dem Stirnring 18. In diesem Dichtabschnitt kann, wie in Fig. 2 gezeigt, eine Nut 57 zur Aufnahme einer Dichtung wie eines O-Ringes vorgesehen sein. Die Nut 54 kann durch Ausfräsen mittels eines Kegelfräsers ausgebildet werden.

Damit ist das Abutment 50 verdrehgesichert mit dem Grundkörper 10 verbunden. Mittels der das Abutment 50 durchsetzenden Halteschraube 60, die in das Innengewinde 14 des Grundkörpers 10 eingeschraubt werden kann, lässt sich das Abutment 50 fest und verdrehgesichert mit dem Grundkörper 10 verbinden. Um das Entfernen des Abutments 50 aus dem Grundkörper 10 zu erleichtern, kann in der das Abutment durchsetzenden Bohrung ein in Fig. 2 nicht dargestelltes Innengewinde vorgesehen sein, in das nach Entfernen der Halteschraube ein nicht dargestellter Abdrückpfosten mit Außengewinde eingeschraubt wird, der sich mit seinem zervikalen Ende am Innengewinde 14 des Grundkörpers abstützt. Beim Einschrauben des Haltepfostens wird das Abutment 50 dann aus dem Grundkörper 10 koronal angehoben und kann entnommen werden.

Je nach Teilung bzw. Teilungsverhältnis des Grundkörpers 10 bzw. des Abutments 50 lässt sich das Abutment 50 in unterschiedlichen Rotationsstellungen, beispielsweise in einer DEG-Teilung von 30°, 45°, 60°, 90°, 120° oder 180°, in den Grundkörper 10 einsetzen, wodurch dem behandelnden Arzt eine Anzahl von Gestaltungsmöglichkeiten zur Verfügung steht. Dabei kann die Anzahl der Mutterteil-Formschlusselemente größer als diejenige der Vaterteil-Formschlusselemente sein.

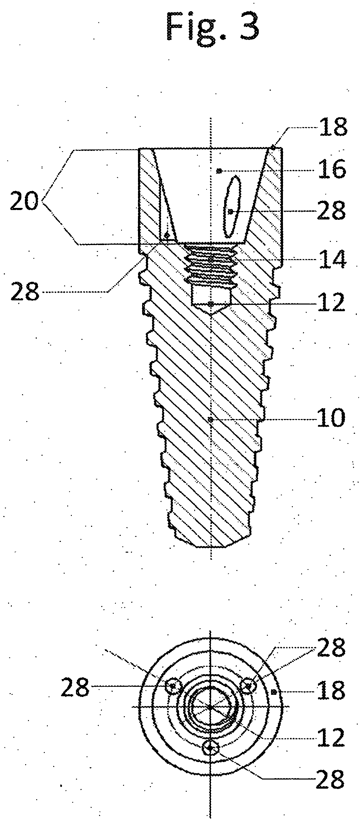

Figur 3 zeigt einen Grundkörper 10 mit gegenüber dem Grundkörper 10 aus Fig. 1 dahingehend geändertem Aufbau, dass der Grundkörper 10 im Formschlussabschnitt 20 drei Formschlussnuten 28 aufweist, in die jeweils ein korrespondierender Federsteg am Abutment eingreifen kann. Der Grundkörper 10 kann auch bei dieser Ausführungsform auf einfache Weise durch maschinelle Bearbeitung eines Rohlings hergestellt werden. So können vor Ausbildung des kegelstumpfartigen Bereiches beispielsweise drei umfangsmäßig gleich beabstandete Bohrungen koaxial im vorbestimmten Abstand zur Blindbohrung 12 im Formschlussabschnitt 20 des Grundkörpers gebohrt werden. Beim Aufbohren des Formschlussabschnittes 20 mit einem Kegelfräser werden Nuten in der Wandung ausgebildet. Wenn der Durchmesser der Bohrung der Differenz zwischen den Durchmessern der den Kegelstumpf begrenzenden Kreisflächen (Deckfläche und Grundfläche) entspricht, haben die Nuten 28 einen zervikal zunehmend rinnenförmigen Querschnitt. Beim Einsetzen in den Grundkörper 10 kann das Abutment 50 dann über diesen Nuten korrespondierende Federstege 53 am Abutment 50 geführt werden. Die Nut 28 kann auch durch Ausfräsen mittels eines Kegelfräsers ausgebildet werden.

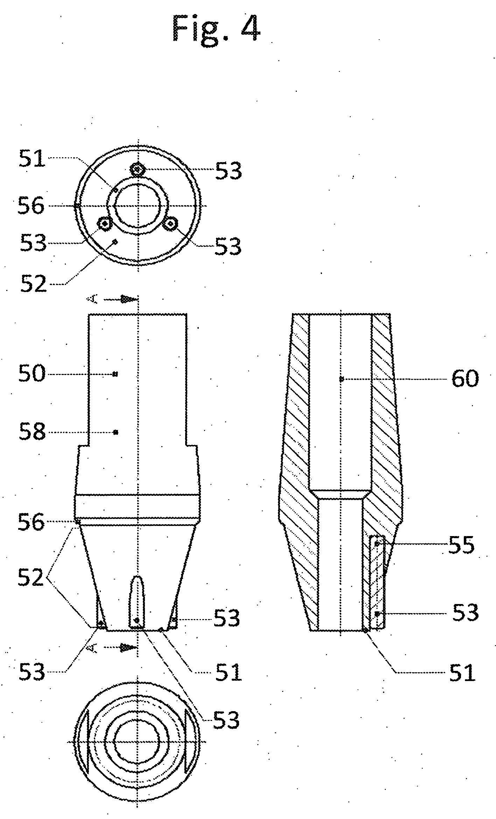

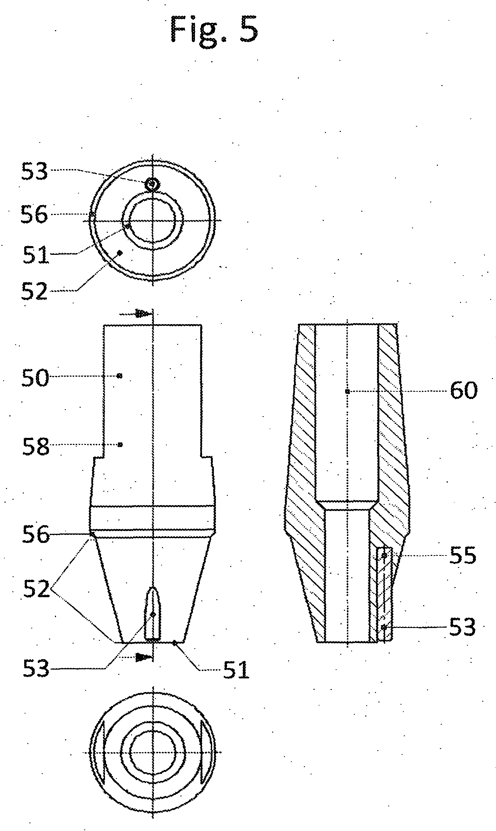

Ein der Ausführungsform des Grundkörpers 10 gemäß Figur 3 angepasstes Abutment 50 mit dem Kegelstumpf 52 ist schematisch in zwei Teilansichten mit drei Federstegen 53 in Figur 4 oder mit einem Federsteg 53 in Figur 5 dargestellt. Wie im jeweils oberen Teil der vorgenannten Figuren im Radialschnitt gezeigt, ist jeweils ein Stift in der Blindbohrung 55 gegen ein axiales Herausfallen aus der Blindbohrung 55, beispielsweise in einer Presspassung, gesichert. Somit ist das erfindungsgemäße Abutment auch bei dieser Ausführungsform auf einfache Weise durch maschinelle Bearbeitung eines Rohlings herstellbar, wobei auch Fräsungen zur Ausbildung von den Formschlusselementen durchgeführt werden müssen.

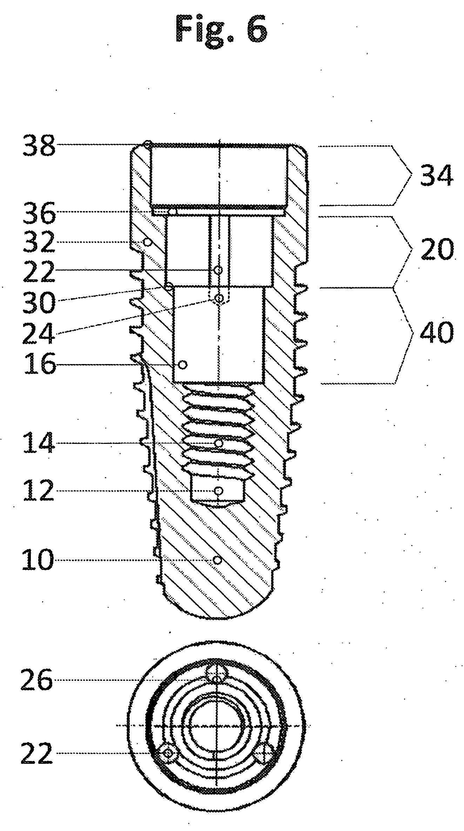

Wie Fig. 6 zeigt, weist das Einzelzahnimplantat bei dem dort dargestellten Ausführungsbeispiel einen Grundkörper 10 der Gattung auf, wie er in ähnlicher Form beispielsweise in der DE 195 34 979 C1 beschrieben ist.

Der Grundkörper 10, der an seinem in Fig. 6 unten gezeigten zervikalen Ende geschlossen ausgebildet ist, weist eine zu seinem in Fig. 6 oben liegenden koronalen Ende hin offene Blindbohrung 12 auf. Nahe dem zervikalen Ende der Blindbohrung 12 ist ein Innengewinde 14 mit kleinem Durchmesser, in das eine in Fig. 6 zeichnerisch nicht dargestellte Halteschraube einschraubbar ist, vorgesehen. An das Innengewinde 14 des Grundkörpers 10 schließt in koronaler Richtung eine hohlzylindrische Ringausnehmung 16 mit gegenüber dem Innengewinde 14 vergrößertem Innendurchmesser an. Die Ringausnehmung weist in der dargestellten Form drei "gestufte" Bereiche (40;20;34) mit unterschiedlichen Innendurchmessern auf.

Dabei weist die Ringausnehmung 16 einen an das Innengewinde 14 koronal anschließenden Zentrierabschnitt 40 auf. An den Zentrierabschnitt 40 der Ringausnehmung 16 schließt sich in koronaler Richtung ein Formschlussabschnitt 20 an, der einen gegenüber dem Zentrierabschnitt 40 vergrößerten Innendurchmesser hat und eine hohlzylindrische Innenwandung mit - in der Ausführungsform gemäß Figur 1 - drei radial nach innen gerichteten Federstegen 26 aufweist. Die Federstege 26 sind zu den Formschlussnuten 66 an dem Abutment 50 nach Art einer Nut-Feder-Verbindung korrespondierend ausgebildet und können derart bemessen sein, dass sie sich über die gesamte axiale Länge des Formschlussabschnittes 24 erstrecken. Die Federstege 26 können durch maschinelle Bearbeitung aus dem Grundkörper ausgebildet sein. Es ist jedoch vorteilhaft auch möglich, die Federstege 26 dadurch auszubilden, dass im Formschlussabschnitt 24 Stifte 22 in gleichmäßig über den Umfang verteilten axialen Haltenuten 25 gehalten werden. Dabei kann jeder der Stifte 22 mit an Haltenut 25 angepasstem Querschnitt, beispielsweise als Zylinderstift, so in die Haltenut 25 eingesteckt und von der Haltenut 25 teilweise umfasst gehalten sein, dass ein radial nach innen gerichteter Federsteg 26, der mit einer Formschlussnut 66 des Abutments 50 korrespondiert, ausgebildet ist.

An den Formschlussabschnitt 20 schließt in koronaler Richtung ein Endabschnitt 34 mit einem koronalen Stirnrand 38 an, wobei der Endabschnitt 34 einen gegenüber dem Formschlussabschnitt 20 vergrößerten Innendurchmesser aufweist. Der Endabschnitt 34 hat eine dem Außendurchmesser des Dichtabschnittes 70 des Abutments 50 korrespondierende Innenwandung, die zylindrisch oder konisch ausgebildet sein kann. In dem Endabschnitt 34 kann an dem, dem Formschlussabschnitt 20 zugewandten Bereich ein Sicherungsring 36, beispielweise in einer Presspassung, eingepasst sein. Der Innendurchmesser des Sicherungsringes 36 entspricht mindestens etwa dem Durchmesser des Formschlussabschnittes 20, kann aber auch etwas größer sein. Der Sicherungsring 30 dient gegen ein Herausfallen der Stifte 22 aus der Nut 25 bzw. Bohrung 24. Als Höhenanschlag für das Abutment dienen in zylindrischer Ausführung Stirnrand 38, in konischer Ausführung der als Innenkonus ausgeführte Endabschnitt 34 des Grundkörpers und der als Außenkonus ausgeführte Dichtabschnitt 70 des Abutments.

Der Grundkörper 10 kann auf einfache Weise durch maschinelle Bearbeitung eines Rohlings hergestellt werden. Vorteilhaft dafür ist insbesondere die Ausgestaltung der Federstege als jeweils in Blindbohrung 24 und zugeordneter Nut 25 im Formschlussabschnitt 20 des Grundkörpers 10 angeordnete Zylinderstifte. So können vor Ausbildung des Formschlussabschnittes Bohrungen koaxial zur Blindbohrung 12 bis in die Wandung 32 im Zentrierabschnitt 40 des Grundkörpers gebohrt werden und beim Aufbohren des Formschlussabschnittes 20 bis zum Schulterring 30 als Nuten 25 im Formschlussabschnitt und auch in der Wandung 32 als Blindbohrungen 24 verbleiben.

Obgleich die Verwendung von Zylinderstiften fertigungstechnisch vorteilhaft ist, ist es ebenso möglich, Stifte mit einem regelmäßigen oder unregelmäßigen polygonalen Querschnitt und entsprechend im Querschnitt angepasster Nut 25 und Blindbohrung 24 und angepasster Formschlussnut 66 zu verwenden.

Ein in Fig. 2 gezeigtes Abutment 50 dient als Befestigungskopf für einen nicht gezeigten festsitzenden Zahnersatz und ist mit einer umlaufenden Ansetzschulter 61 für den Zahnersatz versehen. Im Anschluss an eine auf den Stirnrand 38 des Grundkörpers 10 aufsetzbare Schulter 59, die als umlaufende Ringschulter ausgebildet ist, weist das Abutment 50 in zervikaler Richtung eine umlaufende Nut 63 für die Aufnahme eines Dichtmittels wie eines nicht dargestellten O-Rings, einen Dichtabschnitt 70, einen Formschlussabschnitt 52 und einen Zentrierabschnitt 62 mit eines Zentrierbund 64 auf. Im Formschlussabschnitt 56 sind eine Anzahl von axial verlaufenden Formschlussnuten 66 vorgesehen, die in ihrer Form und Anordnung, aber nicht notwendigerweise in ihrer Anzahl, den Federstegen 26 des Grundkörpers 10 entsprechen.

Beim Einsetzen des Abutments 50, das mit einer axialen Längsbohrung versehen ist, dessen Innendurchmesser dem Außendurchmesser der nicht gezeigten Halteschraube entspricht, in den Grundkörper 10 greift der Zentrierabschnitt 62 mit Zentrierbund 64 in den Zentrierabschnitt 40 der Ringausnehmung 16 ein, wobei die glatte Zylindermantelfläche des Zentrierabschnittes 62 an der Zylindermantelfläche des Zentrierabschnittes 40 des Grundkörpers 10 zur Anlage kommt.

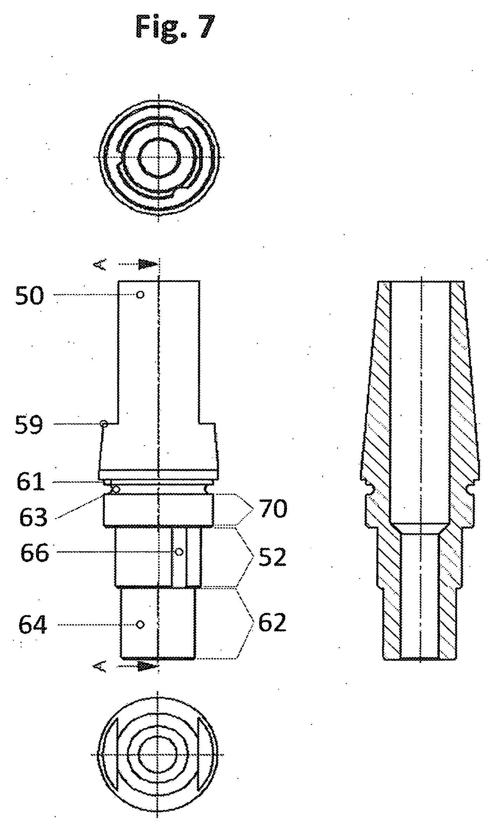

Der Dichtabschnitt 70 des Abutments 50 sitzt vorzugsweise mit Passsitz in dem Endabschnitt 34 des Grundkörpers 10. Die Federstege 26 greifen in die Formschlussnuten 66 ein, während die Schulter 61 an dem Stirnrand 38 zur Anlage kommt. Damit ist das Abutment 50 verdrehgesichert mit dem Grundkörper 10 verbunden. Mittels der das Abutment 50 durchsetzenden Halteschraube, die in das Innengewinde 14 des Grundkörpers 10 einschraubbar ist, lässt sich das Abutment 50 fest mit dem Grundkörper 10 verbinden. Um das Entfernen des Abutments 50 aus dem Grundkörper 10 zu erleichtern, kann in der die das Abutment durchsetzenden Bohrung ein in Fig. 7 nicht dargestelltes Innengewinde, in der Regel am koronalen Ende des Formschlussabschnittes 52, vorgesehen sein, in das nach Entfernen der Halteschraube ein nicht dargestellter Abdrückpfosten mit Außengewinde eingeschraubt wird, der sich mit seinem zervikalen Ende am Innengewinde 14 des Grundkörpers abstützt. Beim Einschrauben des Haltepfostens wird das Abutment 50 dann aus dem Grundkörper 10 koronal angehoben und kann entnommen werden.

Je nach Teilung bzw. Teilungsverhältnis des Grundkörpers 10 bzw. des Abutments 50 lässt sich das Abutment 50 in unterschiedlichen Rotationsstellungen, beispielsweise in einer DEG-Teilung von 30°, 45°, 60°, 90°, 120°oder 180°, in den Grundkörper 10 einsetzen, wodurch dem behandelnden Arzt eine Anzahl von Gestaltungsmöglichkeiten zur Verfügung steht. Dabei kann die Anzahl der Abutment-Formschlusselemente 66 größer als diejenige der Grundkörper-Formschlusselemente 28 sein.

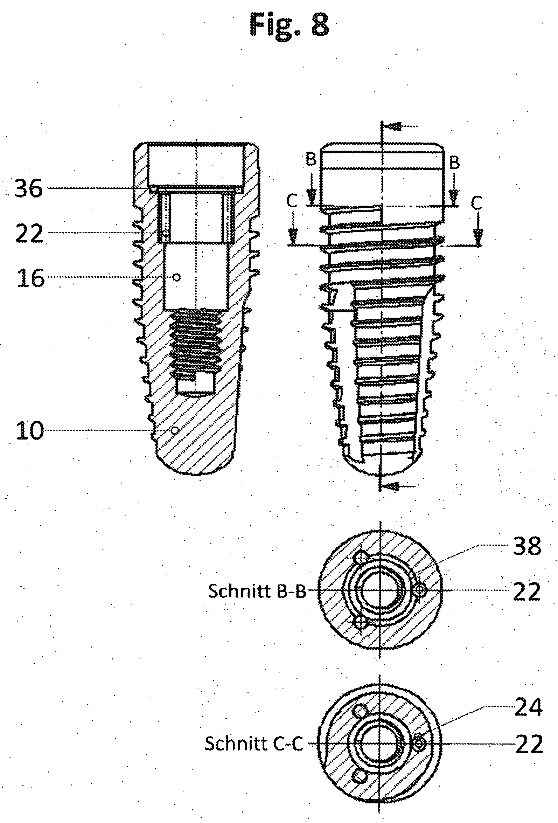

Wie in Fig. 8 zu erkennen, sind in den Schnittebenen B-B und C-C die in der Blindbohrung 24 angeordneten Stifte 22 dargestellt, die die radial nach innen in die Ringausnehmung 16 vorstehenden Federstege 26 ausbilden.

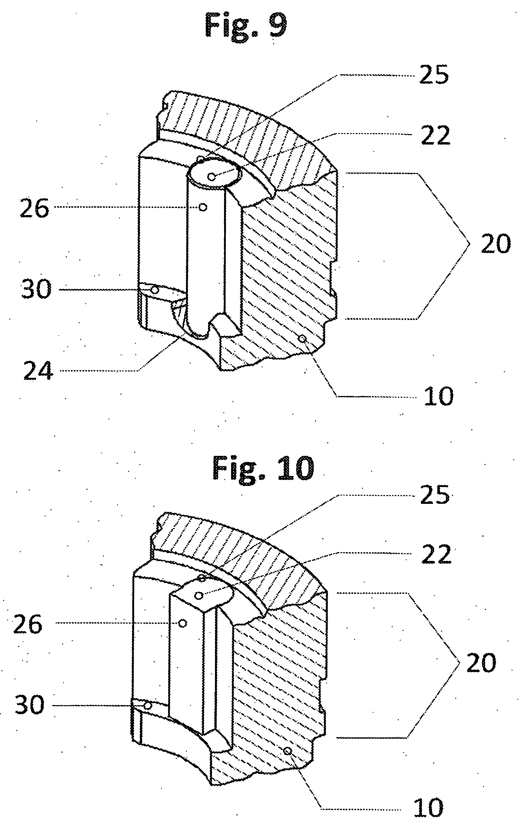

Anhand von zwei Teildraufsichten des Abutments aus Fig. 7 in den Figuren 9 und 10 sind zwei Ausführungsformen der Federstege erkennbar.

In Fig. 9 ist der Federsteg 26 durch den in die Blindbohrung 24 im Schulterring 30 und die Nut 25 eingesteckten zylindrischen Stift 22 ausgebildet. Die korrespondierende Formschlussnut 66 im Abutment 50 hat bei dieser Ausführungsform einen kreissegmentartigen Querschnitt.

Wie in Fig. 10 gezeigt, kann der Federsteg 26 durch den in die Nut 25 eingesteckten zylindrischen Stift 22 ausgebildet sein und einen rechtwinkligen Federsteg 26 ausbilden. Die korrespondierende Formschlussnut 66 im Abutment 50 hat bei dieser Ausführungsform ebenfalls einen rechtwinkligen Querschnitt.

Bei den Ausführungsformen gemäß der Figuren 9 und 10 umfasst die Nut 25 den Stift 22 soweit, dass der Stift zum Einen radial nicht beweglich in der Nut 25 gehalten wird und zum Anderen ein radialer Teilabschnitt des Stiftes aus der Nut nach innen in die Ringausnehmung 16 hervorsteht. Um eine axiale Bewegung der Stifte 22 zu verhindern, kann ein in den Fig. 9 und 10 nicht gezeigter Sicherungsring koronal auf die Stifte 22 in einem Passsitz angeordnet sein.

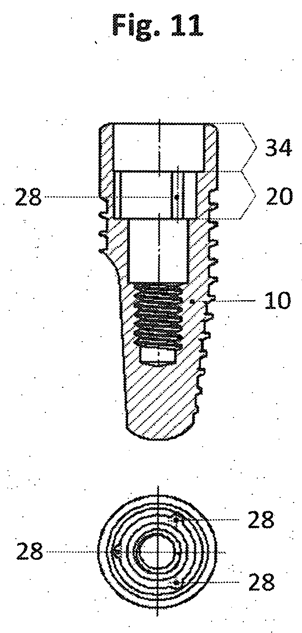

Figur 11 zeigt einen Grundkörper 10 mit gegenüber dem Grundkörper 10 aus Fig. 6 dahingehend geändertem Aufbau, dass der Grundkörper 10 im Formschlussabschnitt 20 drei Nuten 28 aufweist, in die jeweils ein korrespondierender Federsteg am Abutment eingreifen kann. Der Grundkörper 10 kann auch bei dieser Ausführungsform auf einfache Weise durch maschinelle Bearbeitung eines Rohlings hergestellt werden: So können vor Ausbildung des Formschlussabschnittes beispielsweise drei umfangsmäßig gleich beabstandete Bohrungen koaxial im vorbestimmten Abstand zur Blindbohrung 12 im Formschlussabschnitt 20 des Grundkörpers gebohrt werden. Beim Aufbohren des Formschlussabschnittes 20 bis zum Schulterring 30 werden Nuten 28 in der Wandung 32 im Formschlussabschnitt ausgebildet. Wenn der Durchmesser der Bohrung der Differenz zwischen Innendurchmesser des Endabschnittes 34 und dem Innendurchmesser des Formschlussabschnittes 20 entspricht, haben die Nuten 28 einen etwa halbkreisförmigen Querschnitt, wie in Figur 11 im unteren Teil gezeigt ist. Beim Einsetzen in den Grundkörper 10 kann das Abutment 50 dann über diesen Nuten 28 korrespondierende Federstege 68 am Abutment bereits im zylindrischen Endabschnitt 34 geführt werden.

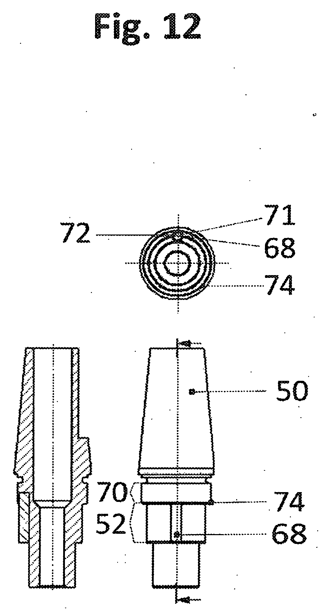

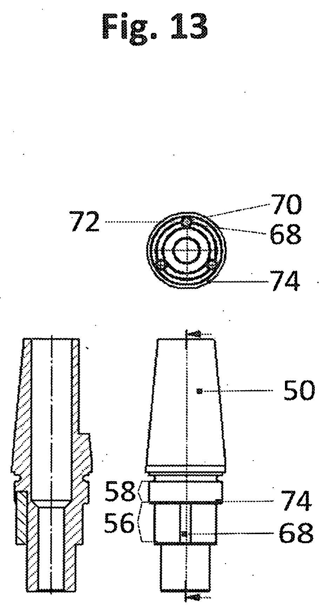

Ein der Ausführungsform des Grundkörpers 10 gemäß Figur11 angepasstes Abutment 50 mit zylindrischem Endabschnitt 70 und Formschlussabschnitt 52 ist schematisch in mehreren Teilansichten jeweils mit einem Federsteg 68 in Figur 12 oder mit drei Federstegen 68 in Figur 13 dargestellt. Wie im jeweils oberen Teil der vorgenannten Figuren im Radialschnitt gezeigt, ist ein Stift 71 in einer nicht dargestellten Bohrung in einem Schulterring 74 gegen ein axiales Herausfallen aus der Haltenut 72, beispielsweise in einer Presspassung, gesichert. Somit ist das erfindungsgemäße Abutment auch bei dieser Ausführungsform auf einfache Weise durch maschinelle Bearbeitung eines Rohlings herstellbar, ohne dass aufwändige Fräsungen zur Ausbildung von Formschlusselementen durchgeführt werden müssen.

### Bezugszeichenliste

- 10: Grundkörper
- 12: Bohrung
- 14: Innengewinde
- 16: Ringausnehmung
- 18: Stirnring
- 20: Formschlussabschnitt
- 22: Stift
- 24: Blindbohrung
- 25: Nut/Bohrung
- 26: Federsteg
- 28: Formschlussnut
- 30: Schulterring
- 32: Wandung
- 34: Endabschnitt
- 36: Sicherungsring
- 38: Stirnrand
- 40: Zentrierabschnitt/Führungsabschnitt

- 50: Abutment
- 51: Stirnring
- 52: Formschlussabschnitt
- 53: Federsteg
- 54: Formschlussnut
- 55: Blindbohrung
- 56: Schulter
- 57: Nut zur Aufnahme einer Dichtung
- 58: Befestigungskopf für Zahnersatz
- 59: Ansetzschulter
- 60: Bohrung für Haltschraube
- 61: Ansetzschulter
- 62: Zentrierabschnitt
- 63: Umlaufnut
- 64: Zentrierbund
- 66: Formschlussnut
- 68: Federsteg
- 70: Dichtabschnitt
- 71: Stift
- 72: Haltenut
- 74: Schulterring

## Patentansprüche

1. Enossales Einzelzahnimplantat für einen festsitzenden Zahnersatz, mit
a. einem im Wesentlichen zylindrischen, in eine in einen Kieferknochen eingebrachte Bohrung einsetzbaren Grundkörper (10) mit einer Ringausnehmung (16) mit einem Formschlussabschnitt (20) und mit einer zu seinem koronalen Ende hin offenen, zervikal zu der Ausnehmung angeordneten Bohrung (12), die einen am zervikalen Ende im Grundkörper angeordneten Gewindeabschnitt (14) zur Festlegung einer Haltschraube aufweist,
b. einem in die Ausnehmung (16) des Grundkörpers einsetzbaren Abutment (50) mit einem Formschlussabschnitt (52), mit einer Bohrung (60) zur Aufnahme der Halteschraube und mit einem Befestigungskopf (58) für den Zahnersatz, und
c. einer in die Blindbohrung des Grundkörpers einsetzbaren und das Abutment durchsetzenden Halteschraube,
wobei der Formschlussabschnitt (20) des Grundkörpers (10) mindestens ein in Umfangsrichtung wirkendes Grundkörper-Formschlusselement (26) aufweist und der Formschlussabschnitt (52) des Abutments (50) mindestens ein zu dem Grundkörper-Formschlusselement (26) komplementäres Abutment-Formschlusselement (54) aufweist,
wobei der Formschlussabschnitt des Grundkörpers und der Formschlussabschnitt des Abutments in der Form zueinander komplementär sind, dass das Abutment in die Ausnehmung des Grundkörpers so einsetzbar ist, dass die jeweiligen Formschlusselemente miteinander in Eingriff gebracht werden,
wobei die zueinander komplementären Formschlusselemente (22, 26; 54, 66; 28, 53; 68) in Form einer Vaterteil-Mutterteil-Verbindung nach Art einer Nut-Feder-Verbindung dadurch ausgebildet sind, dass ein sich parallel zur Längsachse des Grundkörpers erstreckender Federsteg (26; 53) an einem Bauteil von Grundkörper (10) oder Abutment (50) vorgesehen ist, der in eine korrespondierende Nut (28; 54) am anderen Bauteil verdrehgesichert eingreift, wobei der Federsteg (26) in Form eines in einer Haltenut gehaltenen Stiftes (22) ausgebildet ist.

2. Enossales Einzelzahnimplantat nach Anspruch 1, wobei der Stift (22) in einer Blindbohrung (24; 55) gehalten ist.

3. Enossales Einzelzahnimplantat nach Anspruch 2, wobei der in der Blindbohrung (24; 55) gehaltene Stift einen kreisförmigen Querschnitt hat.

4. Enossales Einzelzahnimplantat nach Anspruch 1, 2 oder 3, bei dem das jeweilige Vaterteil (22, 26) an dem Grundkörper (10) und das korrespondierende Mutterteil (54) am Abutment (50; 66) angeordnet sind.

5. Enossales Einzelzahnimplantat nach Anspruch1, 2 oder 3, bei dem das jeweilige Vaterteil (53; 68) an dem Abutment (50) und das korrespondierende Mutterteil (28) am Grundkörper (10) angeordnet sind.

6. Enossales Einzelzahnimplantat nach einem der vorangehenden Ansprüche, wobei die zueinander komplementären Formschlusselemente bezüglich des Umfangs des Grundkörpers und des Abutments eine aufeinander abgestimmte 30, 60, 90 oder 120 DEG-Teilung aufweisen.

7. Enossales Einzelzahnimplantat nach einem der vorangehenden Ansprüche, wobei die Anzahl der Mutterteil-Formschlusselemente größer ist als diejenige der Vaterteil-Formschlusselemente.

8. Enossales Einzelzahnimplantat nach einem der vorangehenden Ansprüche, wobei der Formschlussabschnitt (20) des Grundkörpers (10) als Hohl kegelstumpf (16) ausgebildet ist, wobei die Längsachse des Hohlkegelstumpfes koaxial zur Längsachse des Grundkörpers ist und die Grundfläche des Hohlkegelstumpfes dem koronalen Ende des Grundkörpers zugewandt ist, und wobei das Abutment (50) einen dem Hohlkegelstumpf korrespondierenden Kegelstumpf (52) aufweist.

9. Enossales Einzelzahnimplantat nach Anspruch 8, wobei der Hohlkegelstumpf des Grundkörpers einen Konuswinkel von 6° bis 18°, besonders 10° bis 16°, ganz besonders 12° bis 15°, insbesondere 14°, jeweils zur Längsachse des Hohlkegelstumpfes angegeben, aufweist.

10. Enossales Einzelzahnimplantat nach Anspruch 8 oder 9, wobei der Hohlkegelstumpf (16) des Grundkörpers (10) sich vom koronalen Ende (18) des Grundkörpers bis zu dem Gewindeabschnitt (14) zur Aufnahme der Halteschraube am zervikalen Ende des Grundkörpers erstreckt.

11. Enossales Einzelzahnimplantat nach einem der Ansprüche 1 bis 7, wobei der Formschlussabschnitt (20) des Grundkörpers (10) als Hohlzylinder ausgebildet ist, wobei die Längsachse des Hohlzylinders koaxial zur Längsachse des Grundkörpers ist und wobei das Abutment (50) einen dem Hohlzylinder korrespondierenden Zylinderabschnitt (52) aufweist.

12. Enossales Einzelzahnimplantat nach Anspruch 11, wobei der Formschlussabschnitt des Grundkörpers (10) zervikal zu dem hohlzylindrischen Endabschnitt (34) des Grundkörpers (10) angeordnet ist und einen gegenüber dem Endabschnitt (34) verringerten Innendurchmesser aufweist, und das Abutment (50) einen dem Endabschnitt (34) korrespondierenden Dichtabschnitt (70) aufweist..

13. Enossales Einzelzahnimplantat nach Anspruch 11 oder 12, wobei an den Formschlussabschnitt (20) der Ringausnehmung (16) zervikal ein Zentrierabschnitt (40) der Ringausnehmung (16) mit gegenüber dem Formschlussabschnitt (20) verringertem Durchmesser anschließt, und das Abutment (50) einen dem Zentrierabschnitt (40) korrespondierenden Zentrierbund (64) aufweist.

14. Enossales Einzelzahnimplantat nach einem der Ansprüche 12 oder 13, wobei der Dichtabschnitt (70) des Abutments (50) und der Endabschnitt (34) des Grundkörpers (10) als zueinander korrespondierende Konen ausgebildet sind.

## Claims

1. An endosseous single tooth implant for a fixed tooth replacement, comprising
a. a substantially cylindrical base body (10), which can be inserted into a bore made in a jaw bone, said base body (10) having an annular recess (16), a positively locking portion (20) and a bore (12) which is open towards its coronal end and which is arranged cervically relative to the recess and which has a threaded portion (14) which is arranged at the cervical end in the base body for fixing a holding screw,
b. an abutment (50) which can be inserted into the recess (16) of the base body, said abutment (50) having a positively locking portion (52), a bore (60) for receiving the holding screw and a fixing head (58) for the tooth replacement, and
c. a holding screw which can be inserted into the blind bore in the base body and which passes through the abutment,
wherein the positively locking portion (20) of the base body (10) has at least one base body positively locking element (26) operative in the peripheral direction and the positively locking portion (52) of the abutment (50) has at least one abutment positively locking element (54) complementary to the base body positively locking element (26),
wherein the positively locking portion of the base body and the positively locking portion of the abutment are complementary to each other in such a shape that the abutment can be so inserted into the recess in the base body that the respective positively locking elements are brought into engagement with each other,
wherein the mutually complementary positively locking elements (22, 26; 54, 66; 28, 53; 68) are in the form of a male part-female part connection in the manner of a spring leg - groove connection so that a spring leg (26; 53), which extends parallel to the longitudinal axis of the base body and which is provided on a component of the base body (10) or the abutment (50), engages in rotationally-secured relationship into a corresponding groove (28; 54) on the other component wherein the spring leg (26) is in the form of a pin (22) held in a holding groove.

2. An endosseous single tooth implant according to claim 1 in which the pin (22) is held in a bore (24; 55).

3. An endosseous single tooth implant according to claim 2 wherein the pin held in the bore (24; 55) is of a circular cross-section.

4. An endosseous single tooth implant according to claim 1, 2 or 3 in which the respective male part (22, 26) is arranged on the base body (10) and the corresponding female part (54) is arranged on the abutment (50; 66).

5. An endosseous single tooth implant according to claim 1, 2 or 3 in which the respective male part (53; 68) is arranged on the abutment (50) and the corresponding female part (28) is arranged on the base body (10).

6. An endosseous single tooth implant according to one of the preceding claims wherein the mutually complementary positively locking elements have with respect to the periphery of the base body and of the abutment a mutually matched 30, 60, 90 or 120 degrees graduation.

7. An endosseous single tooth implant according to one of the preceding claims wherein the number of the female part positively locking elements is greater than that of the male part positively locking elements.

8. An endosseous single tooth implant according to one of the preceding claims wherein the positively locking portion (20) of the base body (10) is in the form of a hollow truncated cone (16), wherein the longitudinal axis of the hollow truncated cone is coaxial with the longitudinal axis of the base body and the base surface of the hollow truncated cone faces towards the coronal end of the base body and wherein the abutment (50) has a truncated cone (52) corresponding to the hollow truncated cone.

9. An endosseous single tooth implant according to claim 8 wherein the hollow truncated cone of the base body has a cone angle of 6° to 18°, in particular 10° to 16°, quite particularly 12° to 15°, in particular 14°, in each case relative to the longitudinal axis of the hollow truncated cone.

10. An endosseous single tooth implant according to claim 8 or claim 9 wherein the hollow truncated cone (16) of the base body (10) extends from the coronal end (18) of the base body to the threaded portion (14) for receiving the holding screw at the cervical end of the base body.

11. An endosseous single tooth implant according to one of claims 1 to 7 wherein the positively locking portion (20) of the base body (10) is in the form of a hollow cylinder, wherein the longitudinal axis of the hollow cylinder is coaxial with the longitudinal axis of the base body and wherein the abutment (50) has a cylinder portion (52) corresponding to the hollow cylinder.

12. An endosseous single tooth implant according to claim 11 wherein the positively locking portion of the base body (10) is arranged cervically to the hollow-cylindrical end portion (34) of the base body (10) and is of an inside diameter which is reduced in relation to the end portion (34), and the abutment (50) has a sealing portion (70) corresponding to the end portion (34).

13. An endosseous single tooth implant according to claim 11 or claim 12 wherein adjoining the positively locking portion (20) of the annular recess (16) cervically is a centring portion (40) of the annular recess (16) of a diameter which is reduced in relation to the positively locking portion (20) and the abutment (50) has a centring shoulder portion (64) corresponding to the centring portion (40).

14. An endosseous single tooth implant according to one of claims 12 or 13 wherein the sealing portion (70) of the abutment (50) and the end portion (34) of the base body (10) are in the form of mutually corresponding cones.

## Revendications

1. Implant dentaire individuel endo-osseux destiné à une prothèse dentaire fixe, comprenant
a. un corps de base (10) essentiellement cylindrique pouvant être inséré dans un perçage pratiqué dans un os maxillaire, et présentant un évidement annulaire (16), une zone (20) d'assemblage par conformation et un alésage (12) qui est ouvert en direction de son extrémité coronaire, est disposé dans la région cervicale par rapport audit évidement, et est doté d'une zone taraudée (14) située dans ledit corps de base, à l'extrémité cervicale, et dévolue au blocage à demeure d'une vis de retenue,
b. une pièce de butée (50) pouvant être insérée dans l'évidement (16) dudit corps de base et pourvue d'une zone (52) d'assemblage par conformation, d'un alésage (60) conçu pour recevoir la vis de retenue, et d'une tête de fixation (58) dédiée à la prothèse dentaire, et
c. une vis de retenue pouvant être insérée dans le trou borgne dudit corps de base et traversant ladite pièce de butée,
la zone (20) d'assemblage par conformation du corps de base (10) comportant au moins un élément (26) d'assemblage par conformation dudit corps de base, agissant dans la direction périphérique, et la zone (52) d'assemblage par conformation de la pièce de butée (50) comportant au moins un élément (54) d'assemblage par conformation de ladite pièce de butée, complémentaire dudit élément (26) d'assemblage par conformation du corps de base,
ladite zone d'assemblage par conformation du corps de base, et ladite zone d'assemblage par conformation de la pièce de butée, offrant des formes qui se complètent mutuellement, ladite pièce de butée pouvant être insérée, dans l'évidement dudit corps de base, de façon telle que les éléments respectifs d'assemblage par conformation soient mis en prise réciproque,
sachant que les éléments complémentaires (22, 26 ; 54, 66 ; 28, 53 ; 68) d'assemblage par conformation sont réalisés sous la forme d'une liaison partie mâle/partie femelle du type solidarisation par rainure et languette, en prévoyant, sur un composant structurel se présentant comme le corps de base (10) ou comme la pièce de butée (50), une languette élastique (26 ; 53) qui s'étend parallèlement à l'axe longitudinal dudit corps de base et pénètre, avec verrouillage antirotation, dans une rainure concordante (28 ; 54) pratiquée dans l'autre composant structurel, ladite languette élastique (26) étant conçue sous la forme d'un tenon (22) arrêté dans une rainure de retenue.

2. Implant dentaire individuel endo-osseux selon la revendication 1, dans lequel le tenon (22) est arrêté dans un trou borgne (24 ; 55).

3. Implant dentaire individuel endo-osseux selon la revendication 2, dans lequel le tenon, arrêté dans le trou borgne (24 ; 55), présente une section transversale circulaire.

4. Implant dentaire individuel endo-osseux selon la revendication 1, 2 ou 3, dans lequel la partie mâle (22, 26) considérée, et la partie femelle (54) concordante, sont respectivement situées sur le corps de base (10) et sur la pièce de butée (50 ; 66).

5. Implant dentaire individuel endo-osseux selon la revendication 1, 2 ou 3, dans lequel la partie mâle (53 ; 68) considérée, et la partie femelle (28) concordante, sont respectivement situées sur la pièce de butée (50) et sur le corps de base (10).

6. Implant dentaire individuel endo-osseux selon l'une des revendications précédentes, dans lequel les éléments complémentaires d'assemblage par conformation présentent, par rapport au pourtour du corps de base et de la pièce de butée, un pas de répartition de 30, 60, 90 ou 120 degrés avec coordination mutuelle.

7. Implant dentaire individuel endo-osseux selon l'une des revendications précédentes, dans lequel le nombre des éléments d'assemblage par conformation de la partie femelle est supérieur à celui des éléments d'assemblage par conformation de la partie mâle.

8. Implant dentaire individuel endo-osseux selon l'une des revendications précédentes, dans lequel la zone (20) d'assemblage par conformation du corps de base (10) est réalisée sous la forme d'un tronc de cône creux (16), l'axe longitudinal du tronc de cône creux étant coaxial à l'axe longitudinal du corps de base, et la surface de base dudit tronc de cône creux étant tournée vers l'extrémité coronaire dudit corps de base, et la pièce de butée (50) est munie d'un tronc de cône (52) concordant avec ledit tronc de cône creux.

9. Implant dentaire individuel endo-osseux selon la revendication 8, dans lequel le tronc de cône creux du corps de base présente un angle de conicité de 6° à 18°, notamment de 10° à 16°, tout particulièrement de 12° à 15°, et de 14° en particulier, avec indication respective par rapport à l'axe longitudinal dudit tronc de cône creux.

10. Implant dentaire individuel endo-osseux selon la revendication 8 ou 9, dans lequel le tronc de cône creux (16) du corps de base (10) s'étend depuis l'extrémité coronaire (18) dudit corps de base jusqu'à la zone taraudée (14) dévolue à la réception de la vis de retenue, à l'extrémité cervicale dudit corps de base.

11. Implant dentaire individuel endo-osseux selon l'une des revendications 1 à 7, dans lequel la zone (20) d'assemblage par conformation du corps de base (10) est réalisée sous la forme d'un cylindre creux, l'axe longitudinal dudit cylindre creux étant coaxial à l'axe longitudinal dudit corps de base, et la pièce de butée (50) étant pourvue d'une zone cylindrique (52) qui concorde avec ledit cylindre creux.

12. Implant dentaire individuel endo-osseux selon la revendication 11, dans lequel la zone d'assemblage par conformation du corps de base (10) est située dans la région cervicale par rapport à la zone d'extrémité (34) dudit corps de base (10), cylindrique et creuse, et présente un diamètre intérieur réduit par rapport à ladite zone d'extrémité (34), la pièce de butée (50) étant dotée d'une zone d'étanchement (70) qui concorde avec ladite zone d'extrémité (34).

13. Implant dentaire individuel endo-osseux selon la revendication 11 ou 12, dans lequel une zone de centrage (40) de l'évidement annulaire (16), présentant un diamètre réduit par rapport à la zone (20) d'assemblage par conformation, se rattache à ladite zone (20) d'assemblage par conformation dudit évidement annulaire (16), dans la région cervicale, et la pièce de butée (50) est munie d'un collet de centrage (64) qui concorde avec ladite zone de centrage (40).

14. Implant dentaire individuel endo-osseux selon l'une des revendications 12 ou 13, dans lequel la zone d'étanchement (70) de la pièce de butée (50), et la zone d'extrémité (34) du corps de base (10), sont réalisées sous la forme de cônes mutuellement concordants.
